(19) Europäisches Patentamt
European Patent Office
Office européen des brevets

(11) **EP 1 624 299 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **04018344.4**

(22) Anmeldetag: **03.08.2004**

(51) Int Cl.:
**G01N 27/416** (2006.01)   **G01N 27/30** (2006.01)
**G01N 27/38** (2006.01)

(54) **Verfahren zur Bestimmung von Parametern einer gasselektiven Elektrode**

Method for determining the parameters of a gaselectrode

Procédé pour déterminer les paramètres d'une électrode sensible aux gaz

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**08.02.2006 Patentblatt 2006/06**

(73) Patentinhaber: **Hach Lange GmbH**
**14163 Berlin (DE)**

(72) Erfinder:
• **Battefeld, Manfred**
**40211 Düsseldorf (DE)**
• **Bittner, Klaus**
**47802 Krefeld (DE)**
• **Golitz, Andreas**
**47445 Moers (DE)**
• **Hahn, Markus, Dr.**
**47906 Kempen (DE)**
• **Kussmann, Michael**
**40476 Düsseldorf (DE)**
• **Stellmach-Hanulok, Aurelia**
**42489 Wülfrath (DE)**

(74) Vertreter: **Eberlein, Jasper et al**
**Ter Smitten Eberlein Rütten**
**Patentanwälte**
**Postfach 27 03 63**
**40526 Düsseldorf (DE)**

(56) Entgegenhaltungen:
**EP-A- 0 667 522     DE-A- 3 937 635**
**GB-A- 1 535 361     US-A- 5 016 201**

• **PATENT ABSTRACTS OF JAPAN Bd. 0184, Nr. 20 (P-1782), 5. August 1994 (1994-08-05) & JP 6 130030 A (FUJI ELECTRIC CO LTD), 13. Mai 1994 (1994-05-13)**

EP 1 624 299 B1

**Beschreibung**

Die Erfindung bezieht sich auf ein Verfahren zur Bestimmung von Parametern einer Kennlinie einer gasselektiven Elektrode in einem automatischen Flüssigkeits-Analysegerät.

Automatische Flüssigkeits-Analysegeräte mit einer gasselektiven Elektrode werden beispielsweise zur Bestimmung des Ammoniumgehaltes in Abwassern eingesetzt. Die Konzentrations/Spannungs-Kennlinie gasselektiver Elektroden wird stets logarithmisch aufgetragen. Die logarithmische Kennlinie von gasselektiven Elektroden ist typischer Weise im Bereich mittlerer und hoher Konzentrationen linear, so dass die Lage und Steigung des linearen Bereichs der Kennlinie durch Messungen mit zwei Standardlösungen verschiedener Konzentration bestimmt werden kann. Bei Konzentrationen unterhalb eines Grenzwertes ist die Kennlinie nicht linear, sondern wird mit weiter abnehmender Konzentration zunehmend flacher. Eine Bestimmung oder Abschätzung des nicht linearen Teiles der Kennlinie wird durch Messungen mit weiteren Standardlösungen vorgenommen. Dieses Verfahren ist aufwändig und zudem ungenau.

Aus US 5,016,210 A ist eine pH-Messanordnung bekannt, die mit Hilfe zweier externer Elektroden, die eine leichte Säure oder leichte Base durch Anlegen einer elektrischen Spannung generieren können, kalibriert werden kann.

Verbrauchte gasselektive Elektroden liefern ungenaue Messergebnisse. Der Grad an Elektrodenverschleiß kann nur durch Auswertung der mit den Standardlösungen ermittelten Messergebnisse erfolgen, was ungenau ist.

Es ist Aufgabe der Erfindung, die Messgenauigkeit von Messungen mit einer gasselektiven Elektrode in einem automatischen Flüssigkeits-Analysegerät zu verbessern.

Diese Aufgabe wird erfindungsgemäß gelöst mit den Merkmalen des Patentanspruches 1.

Gemäß der Erfindung wird die gasselektive Elektrode mit einer Säure gespült. Während des Spülens wird an der gasselektiven Elektrode die anliegende Nullpunkt-Spannung UN ermittelt. Der an der Elektrode anliegende Spannungswert wird als Nullpunkt-Spannung UN gespeichert, sobald sich die Spannung während des Spülens stabilisiert hat.

Durch die Säure wird die gasselektive Elektrode von Karbonaten und anderen Verschmutzungen befreit und schnell von Messgas geräumt. Hierdurch stellt sich an der Elektrode schnell eine Gaskonzentration des Messgases von annähernd Null ein, so dass sich innerhalb kürzester Zeit, nämlich nach spätestens wenigen Minuten, an der Elektrode eine konstante Nullpunkt-Spannung feststellen lässt.

Als Spülsäuren sind Säuren geeignet, die u.a. keine ausgasungsfähigen Bestandteile enthalten. Insbesondere ist Salzsäure nicht geeignet, da diese die Elektrodenfunktion stören würde.

Durch das beschriebene Verfahren kann jederzeit die Nullpunkt-Spannung $U_N$ der gasselektiven Elektrode ermittelt werden. Das Verfahren eignet sich daher ausgezeichnet dazu, in regelmäßigen Abständen und automatisch durchgeführt zu werden. Hieraus lassen sich mehrere Rückschlüsse ziehen, die u.a. genauere Messergebnisse im Bereich kleiner Gaskonzentrationen ermöglichen.

Vorzugsweise erfolgt das Spülen während einer automatischen Reinigung des Analysegerätes. Im Dauerbetrieb des Flüssigkeits-Analysegerätes ist eine regelmäßige Reinigung des nassen Teiles des Analysegerätes erforderlich. Die Elektrode wird während der Reinigung des Analysegerätes gespült, so dass für das Spülen und die Ermittlung der Nullpunkt-Spannung der gasselektiven Elektrode keine Messzeit verloren geht.

Vorzugsweise wird im Anschluss an die Ermittlung der Nullpunkt-Spannung ein Erschöpfungssignal generiert, wenn die Nullpunkt-Spannung einen festgelegten Erschöpfungs-Spannungswert erreicht bzw. überschreitet. Die Nullpunkt-Spannung der Elektrode ist ein zuverlässiger Parameter zur Feststellung der Erschöpfung der gasselektiven Elektrode. Auf diese Weise wird zuverlässig vermieden, dass unbemerkt fehlerhafte Messungen mit einer erschöpften bzw. verbrauchten Elektrode vorgenommen werden.

Vorzugsweise ist die Elektrode eine Ammoniak-Elektrode zur Ermittlung des Ammoniumgehaltes in Abwasser. Als Spülsäure kann Zitronensäure dienen. Grundsätzlich kann es sich jedoch auch um eine andere gasselektive Elektrode handeln, die mit einer Säure gereinigt wird.

Gemäß einer bevorzugten Ausgestaltung erfolgt die Bestimmung des nicht-linearen Bereiches der Kennlinie der gasselektiven Elektrode durch Interpolieren der Kennlinie zwischen ihrem linearen Bereich und dem durch die Nullpunkt-Spannung definierten Nullpunkt nach einer e-Funktion. Der nicht-lineare Bereich der Elektroden-Kennlinie lässt sich mit ausreichender Genauigkeit durch eine e-Funktion darstellen. Da eine relativ genaue Elektroden-Kennlinie im nicht-linearen Bereich bestimmt werden kann, können auch Gas-Konzentrationen unterhalb einer Grenzkonzentration, d.h. unterhalb der Gas-Konzentration, bei der die Kennlinie von ihrem linearen Teil in den nicht-linearen Teil übergeht, mit Genauigkeiten von besser als 10% ermittelt werden.

Vorzugsweise erfolgt für $c <= c_G$ das Interpolieren nach der Funktion

$$U = U_N \left(1 - e^{(E/U_N (\log c - F))}\right),$$

wobei

- U die Elektrodenspannung,

- $U_N$ die Nullpunkt-Spannung der Elektrode,

- E eine die Krümmung der e-Funktion quantifizierende Konstante,

- c die Konzentration des Messgases,

- $c_G$ die Grenzkonzentration, und

- F die Lage der e-Funktion auf der Konzentrations-Achse

angibt.

Mit Hilfe der Forderungen, dass

- der lineare und der nicht-lineare Bereich der Kennlinie in einem Grenzpunkt G ineinander übergehen, und

- der Übergang am Grenzpunkt stetig differenzierbar ist,

und der Funktion

$$U = x \log c + y \text{ für } c >= c_G,$$

sowie durch die Ermittlung von x und y durch zwei Messungen mit Standardlösungen, und Bestimmung der Nullpunkt-Spannung $U_N$ lassen sich drei der vier Unbekannten $U_N$, E, F, sowie $c_G$ bestimmen. Lediglich die Grenzpunkt-Konzentration $c_G$ oder die Krümmungskonstante E bleibt unbestimmt und muss festgelegt werden.

Vorzugsweise wird die Krümmungskonstante E festgelegt. Die Krümmungskonstante E ist elektrodentypisch und wird empirisch ermittelt. Die Krümmungskonstante E lässt sich so genau ermitteln, dass der Fehler in dem auf diese Weise ermittelten nicht-linearen Teil der Kennlinie weniger als 10%, in der Regel sogar weniger als 5% beträgt.

Alleine durch die Ermittlung der Nullpunkt-Spannung $U_N$ während der Spül- bzw. Reinigungs-Pause kann der Messbereich einer gasselektiven Elektrode auf niedrige Gaskonzentrationen im nicht-linearen Bereich der Kennlinie erweitert werden, wobei eine hohe Bestimmungsgenauigkeit im nicht-linearen Bereich der Kennlinie realisiert wird. Dieses Verfahren lässt sich grundsätzlich auf alle Elektroden anwenden, und ist nicht beschränkt auf gasselektive Elektroden.

Im Folgenden wird ein Ausführungsbeispiel der Erfindung anhand der Zeichnungen näher erläutert.

Es zeigen:

Figur 1     eine schematische Darstellung eines erfindungsgemäßen Flüssigkeits-Analysegerätes, und

Figur 2     ein Diagramm, in dem eine Kennlinie K einer gasselektiven Elektrode des Analysegerätes dargestellt ist.

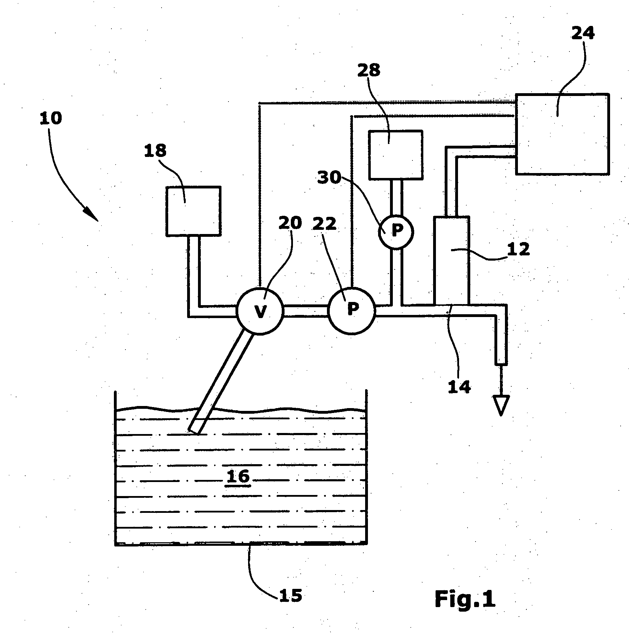

In Figur 1 ist schematisch und vereinfacht ein Flüssigkeits-Analysegerät 10 dargestellt. Das Flüssigkeits-Analysegerät 10 dient im vorliegenden Fall der Bestimmung von Ammonium in Abwasser. Das Analysegerät 10 weist im Wesentlichen eine gasselektive Elektrode 12, eine Pumpe 22, ein Drei-WegeVentil 20, einen Säurebehälter 18, einen Natronlaugen-Behälter 28, eine Natronlaugen-Pumpe 30 sowie eine Steuervorrichtung zum Steuern der Pumpen 22, 30 und des Ventiles 20 sowie Auswerten der von der Elektrode 12 kommenden Spannungssignale auf.

Im Messbetrieb pumpt die Pumpe 22 aus einem Abwasserbehälter 15 Abwasser 16 in Richtung Elektrode 12. Ferner pumpt Pumpe 30 Natronlauge aus dem Behälter 28 in das Richtung Elektrode 12 gepumpte Abwasser. Durch die Natronlauge wird der pH-Wert des Abwassers alkalisch verschoben, wobei sich das Ammonium in Ammoniak umwandelt. Das Ammoniak tritt im Bereich der Elektrode 12 durch eine gasselektive Membran 14, so dass die Elektrode 12 ein dem Ammoniakgehalt des Abwassers 16 entsprechendes Spannungssignal erzeugt, das von der Steuervorrichtung 24 ausgewertet wird.

In regelmäßigen Abständen wird das Analysegerät 10 automatisch gereinigt und die Elektrode 12 gespült. Hierzu schaltet die Steuervorrichtung 24 das Ventil 20 so um, dass Säure, beispielsweise Zitronensäure, aus dem Säurebehälter 18 durch die Pumpe 22 an der Elektrode 12 entlang vorbei gepumpt wird. Hierbei wird die Elektrode 12 von Karbonaten und anderen Verschmutzungen gereinigt, und wird die Elektrode 12 sehr schnell von Ammoniak geräumt.

Dabei stellt sich an der Elektrode 12 eine Nullpunkt-Spannung $U_N$ ein, die von der Steuervorrichtung 24 gemessen und gespeichert wird.

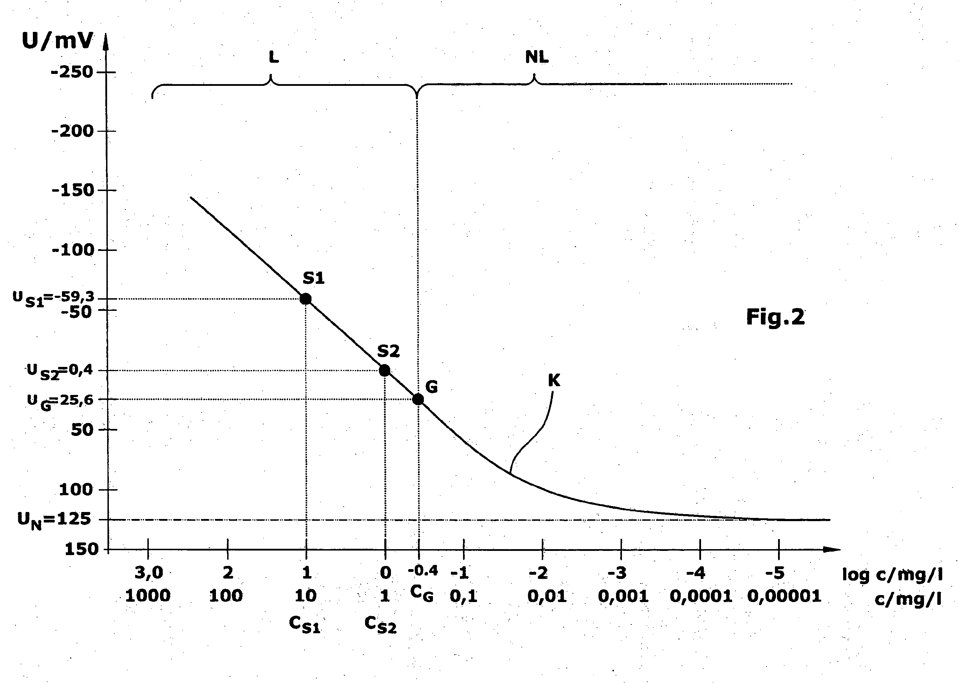

Es können weitere Behälter mit zwei Standardlösungen vorgesehen sein, mit denen zwei Kalibrierungspunkte $S_1$, $S_2$ der in Figur 2 dargestellten Kennlinie K in ihrem linearen Bereich L ermittelt werden können.

In dem Diagramm der Figur 2 ist die Elektrodenspannung U gegenüber dem Logarithmus der Konzentration log c aufgetragen und die Kennlinie K der gasselektiven Elektrode 12 dargestellt. Die Kennlinie K weist einen linearen Bereich L für mittlere und hohe Konzentrationen und einen nicht-linearen Bereich NL für niedrige Konzentrationen auf. Aus den beiden Standard-Messpunkten $S_1$ und $S_2$ wird der lineare Bereich L der Elektroden-Kennlinie K ermittelt und in der Steuervorrichtung 24 gespeichert.

Ferner ist in der Steuervorrichtung 24 eine vorgegebene Krümmungskonstante E gespeichert.

Das Interpolieren des nicht-linearen Bereichs NL erfolgt für $c \leq c_G$ nach der Funktion

$$U = U_N (1 - e^{(E/U_N (\log c - F))}),$$

wobei

- U die Elektrodenspannung,

- $U_N$ die Nullpunkt-Spannung der Elektrode,

- E eine die Krümmung der e-Funktion quantifizierende Konstante,

- c die Konzentration des Messgases,

- $c_G$ die Grenzkonzentration, und

- F die Lage der e-Funktion auf der Konzentrations-Achse angibt.

Mit Hilfe
der Forderungen, dass

- der lineare und der nicht-lineare Teil der Kennlinie in einem Grenzpünkt G ineinander übergehen, und

- der Übergang am Grenzpunkt stetig differenzierbar ist,

der Funktion $U = x \log c + y$ für $c \geq c_G$,
und der festgelegten Krümmungskonstanten E lässt sich die Grenzpunkt Konzentration $c_G$ bestimmen, und in die Funktion für den nicht-linearen Bereich NL einsetzen.

Die Krümmungskonstante E ist elektrodentypisch und wird empirisch ermittelt. Die Krümmungskonstante E lässt sich so genau ermitteln, dass der Fehler in dem auf diese Weise ermittelten nicht-linearen Teil der Kennlinie weniger als 10%, in der Regel sogar weniger als 5% beträgt.

In dem in der Figur 2 dargestellten Beispieldiagramm weist die Standardlösung $S_1$ eine Ammonium-Konzentration von 10,0 mg/l und die Standardlösung $S_2$ eine Ammonium-Konzentration von 1,0 mg/l auf. Die Kalibrierungsmessungen ergaben für $S_1$ eine Spannung $U_{S1}$ von -59,3 mV und für $S_2$ eine Spannung $U_{S2}$ von 0,4 mV.

Aus den Spannungen $U_{S1}$ und $U_{S2}$ ergibt sich für den linearen Bereich L für $c \geq c_G$:

$$U = x \log c + y \text{ mit } x = -59,7 \text{ mV und } y = 0,35 \text{ mV.}$$

Als Nullpunkt-Spannung $U_N$ wurde 125,0 mV gemessen.

Für die Krümmung E wird ein Wert von 75,0 mV/log c festgelegt.

Für die Grenzkonzentration wurde durch die Steuerungsvorrichtung 24 im vorliegenden Fall ein Wert von 0,4 mg/l ermittelt, so dass $\log c_G = -0,4$. Die Grenzpunkt-Spannung $U_G$ beträgt demnach 25,6 mV.

Damit ist der nichtlineare Bereich NL vollständig beschrieben, so dass auch Messungen niedriger Konzentrationen mit ausreichend hoher Genauigkeit durchgeführt werden können.

Der Erschöpfungswert für die Elektrode ist mit 100 mV gespeichert. Wenn die Nullpunkt-Spannung $U_N$ diesen Wert erreicht, wird ein Erschöpfungssignal ausgegeben.

**Patentansprüche**

1. Verfahren zur Bestimmung von Parametern einer Kennlinie einer gasselektiven Elektrode (12) in einem automatischen Flüssigkeits-Analysegerät (10), mit den Verfahrensschritten:

    Spülen der Elektrode (12) mit einer Säure, welche keine ausgasungsfähigen Bestandteile enthält, und
    Ermittlung der an der Elektrode (12) anliegenden Nullpunkt-Spannung $U_N$ während des Spülens.

2. Verfahren nach Anspruch 1, **dadurch gekennzeichnet, dass** das Spülen während einer automatischen Reinigung der Elektrode (12) erfolgt.

3. Verfahren nach Anspruch 1 oder 2, **gekennzeichnet durch** die Ausgabe eines Erschöpfungssignales, wenn die Nullpunkt-Spannung $U_N$ einen festgelegten Erschöpfungswert erreicht.

4. Verfahren nach einem der Ansprüche 1 bis 3, **dadurch gekennzeichnet, dass** die Elektrode (12) eine Ammoniak-Elektrode ist.

5. Verfahren zur Bestimmung von Parametern einer Kennlinie einer gasselektiven Elektrode nach einem der Ansprüche 1 bis 4, **dadurch gekennzeichnet, dass** die Spül-Säure Zitronensäure ist.

6. Verfahren nach einem der Ansprüche 1 bis 5, **gekennzeichnet durch** die Bestimmung des nicht-linearen Bereiches NL der Kennlinie K der Elektrode (14) **durch** Interpolieren der Kennlinie K zwischen ihrem linearen Bereich L und der Nullpunkt-Spannung $U_N$ nach einer e-Funktion.

7. Verfahren nach Anspruch 6, **gekennzeichnet durch** Interpolieren nach der Funktion

$$U = U_N \left(1 - e^{(E/U_N \, (\log c \, - \, F))}\right),$$

    wobei

        - U die Elektrodenspannung,
        - $U_N$ die Nullpunkt-Spannung der Elektrode,
        - E eine die Krümmung der e-Funktion quantifizierende Konstante,
        - c die Konzentration des Messgases,
        - $c_G$ die Grenzkonzentration, und
        - F die Lage der e-Funktion auf der Konzentrations-Achse angibt,

    und wobei

        - der lineare und der nicht-lineare Bereich L, NL der Kennlinie K in einem Grenzpunkt G ineinander übergehen,
        - der Übergang am Grenzpunkt G stetig differenzierbar ist, und
        - die Grenzpunkt-Konzentration $c_G$ oder die Krümmungskonstante E festgelegt sind.

8. Verfahren nach Anspruch 7, **dadurch gekennzeichnet, dass** die Krümmungskonstante E festgelegt ist.

**Claims**

1. Method for determining parameters of a characteristic of a gas-selective electrode (12) in an automatic liquid analyzing device (10), the method comprising the following steps:

    rinsing the electrode (12) with an acid containing no components able to gas out, and
    determining the zero point voltage $U_N$ present at the electrode (12) during the rinsing.

**2.** Method of claim 1, **characterized in that** the rinsing is performed during an automatic cleaning of the electrode (12).

**3.** Method of claim 1 or 2, **characterized by** the output of a depletion signal when the zero point voltage $U_N$ reaches a predetermined depletion value.

**4.** Method of one of claims 1 to 3, **characterized in that** the electrode (12) is an ammonia electrode.

**5.** Method for determining parameters of a characteristic of a gas-selective electrode of one of claims 1 to 4, **characterized in that** the rinsing acid is citric acid.

**6.** Method of one of claims 1 to 5, **characterized by** the determination of the non-linear portion NL of the characteristic K of the electrode (12) by interpolation of the characteristic K between its linear portion L and the zero point voltage $U_N$ according to an exponential function.

**7.** Method of claim 6, **characterized by** an interpolation according to the function

$$U = U_N \left(1 - e^{(E/U_N \, (\log c - F))}\right),$$

where

- U is the electrode voltage,
- $U_N$ is the zero point voltage of the electrode,
- E is a constant quantifying the curvature of the exponential function,
- c is the concentration of the measuring gas,
- $c_G$ is the limit concentration, and
- F is the position of the exponential function on the concentration axis,

and where

- the linear and the non-linear portions L, NL of the characteristic K transition at a limit point G, and
- the transition at the limit point G is always differentiable, and
- the limit point concentration $c_G$ or the constant of curvature E is fixed.

**8.** Method of claim 7, **characterized in that** the constant of curvature E is fixed.

**Revendications**

**1.** Procédé pour déterminer les paramètres d'une caractéristique d'une électrode (12) sélective aux gaz dans un dispositif d'analyse (10), le procédé comprenant les étapes suivantes:

rincer l'électrode (12) avec un acide qui ne contient pas des composants aptes à libérer des gaz, et pendant le rinçage, déterminer la tension zéro $U_N$ présente sur l'électrode (12).

**2.** Procédé selon la revendication 1, **caractérisé en ce que** le rinçage s'effectue pendant une purification automatique de l'électrode (12).

**3.** Procédé selon la revendication 1 ou 2, **caractérisé en ce qu'**un signal d'épuisement est fourni quand la tension zéro $U_N$ atteint un valeur d'épuisement défini.

**4.** Procédé selon l'une quelconque des revendications 1 à 3, caractérisé en que l'électrode (12) est une électrode à ammoniac.

**5.** Procédé pour déterminer les paramètres d'une caractéristique d'une électrode sélective aux gaz selon l'une quelconque des revendications 1 à 4, caractérisé en que l'acide de rinçage est de l'acide citrique.

6. Procédé selon l'une quelconque des revendications 1 à 5, **caractérisé par** la détermination de la partie non-linéaire NL de la caractéristique K de l'électrode (12) par interpolation de la caractéristique K entre sa partie linéaire L et la tension zéro $U_N$ selon une fonction exponentielle.

7. Procédé selon la revendication 1, **caractérisé par** l'interpolation selon la fonction

$$U = U_N \left(1 - e^{(E/U_N \, (\log c - F)}\right),$$

où

- U est la tension de l'électrode,
- UN est la tension zéro de l'électrode,
- E est une constant quantifiant la courbure de la fonction exponentielle,
- c est la concentration du gaz de mesure,
- $c_G$ est la concentration limite, et
- F est la position de la fonction exponentielle sur l'axe de concentration,

et dans lequel

- les parties linéaires et non-linéaires L, NL de la caractéristique K passent l'une dans l'autre à un point de limite G, et
- le passage au point G est continuellement différentiable, et
- la concentration au point limite $c_G$ ou la constante de courbure E est fixée.

8. Procédé selon la revendication 7, **caractérisé en ce que** la constante de courbure E est fixée.

**Fig.1**

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5016210 A